# FASCICULE DE BREVET EUROPEEN

(11) **EP 2 723 601 B1**
(45) Date de publication et mention de la délivrance du brevet: **15.11.2017**
(21) Numéro de dépôt: 12731566.1
(22) Date de dépôt: 13.06.2012
(51) Int. Cl.: B60K 31/00, B60W 30/16

(54) **GESTION DE REGULATION DE VITESSE D'UN VEHICULE**
VERWALTUNG DER GESCHWINDIGKEITSREGELUNG EINES FAHRZEUGS
MANAGEMENT OF SPEED REGULATION OF A VEHICLE

(30) Priorité: 24.06.2011 FR 1155600
(43) Date de publication de la demande: 30.04.2014
(73) Titulaire: Renault S.A.S., 92100 Boulogne-Billancourt (FR); Boutron, Olivier, 27940 Aubevoye (FR)
(72) Inventeur: CHABANON, Christian, F-78180 Montigny-le-bretonneux (FR)
(86) Numéro de dépôt international: PCT/FR2012/051325
(87) Numéro de publication internationale: WO 2012/175845

(56) Documents cités:
- EP-A1- 1 170 652
- EP-A2- 1 598 233
- DE-A1- 10 118 265
- DE-A1- 10 349 433
- US-B1- 6 353 788

## Description

L'invention concerne la gestion de régulation de vitesse d'un véhicule, en particulier un véhicule automobile.

Il existe différents systèmes de régulation de vitesse avec contrôle en distance.

Par exemple, le système ACC (de l'anglais « Adaptive Cruise Control ») permet de réguler la vitesse d'un véhicule automobile en fonction d'une vitesse de consigne et en fonction d'une mesure de distance entre ce véhicule et un véhicule cible. Cette mesure de distance est obtenue par télémètre comprenant un capteur, par exemple un capteur LIDAR (de l'anglais « Light detection and ranging ») capable de recevoir des ondes lumineuses et de mesurer une distance inter véhicules et une vitesse du véhicule cible. Le système ACC a été conçu pour la circulation sur les voies rapides de type autoroute.

En milieu péri urbain, le système LSF (de l'anglais « Low Speed Following ») constitue un régulateur de vitesse avec contrôle de distance à plus basse vitesse.

On peut également citer le système ULSF (de l'anglais « Urban Low Speed Following ») destiné à la circulation dans les centres villes. Ce système permet au conducteur de déléguer la conduite dans les embouteillages : le véhicule dans lequel le système de régulation est embarqué, dit véhicule porteur, s'accroche virtuellement au véhicule cible, ce qui peut permettre de rendre plus fluide le flux de véhicules.

Divers événements peuvent venir perturber une telle conduite en remorque électronique. Notamment, parmi les situations courantes sur la route, on peut citer :
- la situation d'insertion, au cours de laquelle un véhicule vient dépasser le véhicule porteur, et s'insérer sur la voie, et
- la situation de dépassement, au cours de laquelle le véhicule porteur dépasse un véhicule cible.

Dans les deux cas, le système de régulation détecte un changement de cible.

Les systèmes de régulation ACC sont conçus pour gérer ces situations d'insertion et de dépassement. Notamment lorsque le conducteur met son clignotant pour dépasser, une fonction d'aide au dépassement peut être activée.

A contrario, les systèmes de régulation conçus pour le milieu périurbain ou urbain, comme les systèmes LSF ou ULSF, se désactivent si à un moment donné le télémètre ne détecte aucun véhicule cible, c'est-à-dire lors de la plupart des situations de changement de cible. C'est ainsi au conducteur de déclencher l'activation de la fonction de régulation sur la nouvelle cible.

En effet, ces systèmes de régulation LSF, ULSF sont conçus principalement pour adapter la vitesse du véhicule porteur à celle du véhicule cible, afin de fluidifier les flux de véhicules. Si aucun véhicule cible n'est détecté, c'est au conducteur de gérer la conduite en milieu périurbain ou urbain.

En outre, on peut relever que les systèmes de régulation sont ainsi coupés lorsque le véhicule change de file pour dépasser le véhicule cible. On incite en quelque sorte le conducteur à éviter ou à limiter les changements de voies. En effet, une absence de mobilité entre les voies diminue les risques de collisions avec des motos qui circulent entre les voies, et peut permettre d'accroître sensiblement le débit du trafic en réduisant l'effet accordéon entre les véhicules.

En revanche, lorsque la détection de changement de cible est due à une insertion, la réactivation fréquente du système de régulation peut s'avérer agaçante pour le conducteur.

Il existe donc un besoin pour un système moins contraignant pour le conducteur, et de manière générale, il existe un besoin pour une régulation plus adaptée aux circonstances.

Il est par ailleurs connu, par le document EP 1598233, un système d'assistance au changement de voie pour véhicule automobile, tenant compte de la détection d'un autre véhicule et de son comportement sur la voie visée, afin de déterminer une période de temps pour la réalisation du changement de voie, et une plage de vitesse appropriée pour réaliser ledit changement de voie.

Il est proposé un procédé de gestion de régulation de vitesse de véhicule équipé d'au moins un système de régulation, le procédé comprenant
- une étape de réception d'un signal en provenance d'un dispositif de suivi de lignes blanches LDW (de l'anglais « Ligne Departure Warning »), ce signal correspondant à une information quant au franchissement d'une ligne de marquage au sol par le véhicule,
dans lequel la régulation est gérée en fonction du signal reçu dudit dispositif de suivi de lignes blanches.

Ainsi, le dispositif de suivi de lignes blanches permet d'obtenir des informations quand à la position du véhicule porteur relativement à la voie de la route, et ces informations peuvent être utilisées pour gérer la régulation de vitesse.

Un tel dispositif de suivi de lignes blanches peut permettre de détecter aussi bien les lignes continues que les lignes discontinues ou les bandes d'arrêt d'urgence sur une route. Ces dispositifs, bien connus de l'homme du métier, sont conçus pour alerter le conducteur lorsque le véhicule franchit une ligne blanche sans que le conducteur ait préalablement indiqué son intention de franchir cette ligne au moyen d'un clignotant. Dans ce cas, une fonction vibreur est activée afin de faire vibrer le volant de façon à donner au conducteur la sensation du franchissement de la ligne de bande d'arrêt d'urgence, et ainsi le réveiller, ou du moins attirer son attention.

Avantageusement et de façon non limitative, le procédé peut comprendre une étape de détection de changement de véhicule cible. Ainsi, on utilise le dispositif LDW pour différencier les situations d'insertion des situations de dépassement.

On vient ainsi profiter de ce dispositif pour distinguer les situations de dépassement des situations d'insertion, et ainsi conférer davantage de fluidité à la régulation.

Avantageusement et de façon non limitative, le procédé peut comprendre une étape de commande du système de régulation en fonction du signal reçu du dispositif de suivi de lignes blanches. Par exemple, on active et/ou désactive tel ou tel système de régulation en fonction du signal reçu du dispositif LDW.

Alternativement, on peut prévoir que les signaux reçus en provenance du dispositif LDW soient utilisés pour une gestion intra-système de régulation. Par exemple, le passage d'un état à l'autre au sein d'un système de régulation donné peut être fonction du signal reçu du dispositif LDW.

Avantageusement et de façon non-limitative, au cours de l'étape de commande, on contrôle l'activation/désactivation du système de régulation en fonction du signal reçu du dispositif de suivi de lignes blanches. L'étape de commande peut notamment consister à désactiver le système de régulation et/ou à empêcher une désactivation du système de régulation selon la situation détectée.

Ainsi, le système de régulation peut rester activé malgré la détection d'un changement de cible.

Avantageusement et de façon non-limitative, l'étape de commande peut consister à désactiver le système de régulation lorsque le signal reçu du dispositif de suivi de lignes blanches indique un franchissement de ligne blanche. Dit autrement, on maintient une désactivation du système de régulation dans les situations de dépassements, afin d'inciter le conducteur à rester dans la file.

Et avantageusement et de façon non-limitative, lorsque le signal reçu du dispositif de suivi de lignes blanches indique un non-franchissement de la ligne blanche, le système de régulation peut rester activé malgré la détection du changement de cible. Dit autrement, le système de régulation est maintenu dans les situations d'insertion.

Avantageusement, le véhicule peut être équipé d'un système de régulation LSF et/ou ULSF.

L'un et/ou l'autre de ces systèmes peut être coupé en cas de détection de changement de cible et de détection de franchissement de ligne blanche.

Ainsi, ce procédé permet en quelque sorte d'accepter une insertion d'un nouveau véhicule cible sans déconnection de la régulation. Le véhicule reste en mode LSF ou ULSF et adaptera sa vitesse pour revenir à la distance de suivi désirée.

Il est en outre proposé un programme d'ordinateur comportant des instructions pour exécuter le procédé décrit ci-dessus lorsque ces instructions sont exécutées par des moyens de traitement de type processeur.

Il est en outre proposé un dispositif de gestion de régulation de vitesse de véhicule équipé d'au moins un système de régulation, comprenant des moyens de réception d'un signal en provenance d'un dispositif de suivi de lignes blanches, ce signal correspondant à une information quant au franchissement d'une ligne de marquage au sol par le véhicule, et des moyens de traitement agencés pour gérer la régulation en fonction de ce signal reçu.

Ce dispositif peut comprendre ou être intégré dans un processeur, par exemple un microcontrôleur, un microprocesseur, un DSP (de l'anglais « Digital Signal Processor »), un ASIC (de l'anglais « Application-Specific Integrated Circuit »), un FPGA (de l'anglais « Field Programmable Gate Array »), ou autre.

Ce dispositif peut être agencé de façon à mettre en oeuvre le procédé décrit ci-dessus.

L'invention sera décrite plus en détail en référence à :
- la figure 1, laquelle illustre les états d'un système de régulation de vitesse LSF, les états d'un système ACC non gérés par les systèmes LSF étant représentés barrés d'une croix,
- la figure 2, laquelle est algorithme d'un exemple de procédé selon un mode de réalisation de l'invention.

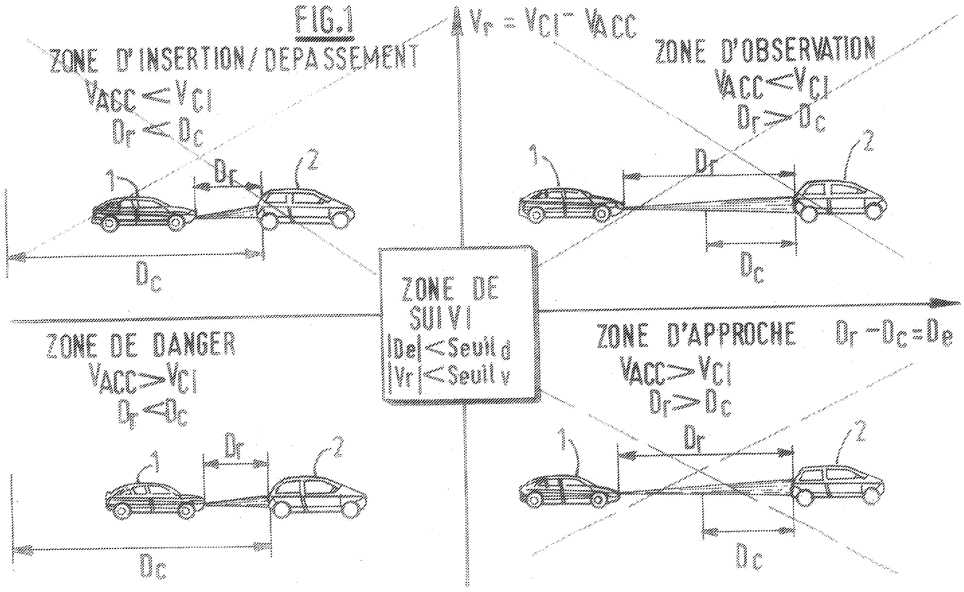

En référence à la figure 1, un véhicule 1 est équipé d'un ou plusieurs systèmes de régulation non représentés, avec un ou des télémètre(s), un ou des capteur(s) de vitesse, un ou des calculateur(s) électronique(s) pour estimer des distances relatives et de vitesses relatives, une interface utilisateur, un module de régulation, etc.

On définit la distance relative Dₑ comme la différence entre la distance Dᵣ entre les véhicules 1, 2 et une distance de consigne D_{C}. La distance de consigne est elle-même fonction de la vitesse. On définit la vitesse relative Vᵣ comme la différence entre la vitesse V_{CI} d'un véhicule cible 2 et la vitesse V_{ACC} du véhicule 1 dans lequel le système ACC est implémenté.

Dans un système ACC tel que décrit dans le document FR 2 770 016, le contrôle en distance entre deux véhicules s'appuie sur la description d'un plan avec cinq états :
- l'observation, lorsque la distance relative Dₑ est positive, et la vitesse relative Vᵣ est positive,
- l'approche lorsque la distance De est positive et la vitesse relative Vᵣ négative,
- l'insertion ou le dépassement lorsque la distance relative Dₑ est négative et la vitesse relative Vᵣ positive,
- le danger lorsque la distance relative Dₑ et la vitesse relative Vᵣ sont négatives, et
- le suivi lorsque la distance relative Dₑ et la vitesse relative Vᵣ sont inférieures à deux seuils respectifs de vitesse et de distance.

Lorsque le véhicule 1 est dans la zone de suivi, la vitesse du véhicule 1 est relativement proche de la vitesse du véhicule 2, et la distance entre les véhicules 1,2 est relativement proche de la distance de consigne D_{C}.

Les systèmes LSF sont décrits dans la norme ISO 22178 et permettent de compléter cette première aide à la conduite ACC en permettant la régulation de 70 km/h par exemple jusqu'à l'arrêt du véhicule. Les systèmes LSF permettent aussi des décélérations en freinage sur une cible jusqu'à 5 mètres par seconde au carré. Ces systèmes LSF ont été conçus pour une circulation péri urbaine.

Afin d'accroître la sécurité, le nombre d'états d'un système LSF est réduit par rapport au système ACC à simplement trois des cinq états de la figure 1 : approche, suivi, et danger.

Pour des vitesses relativement basses, le produit du temps de suivi avec la vitesse du véhicule diminue encore. Pour un temps de deux secondes et une vitesse de 30 km/h, la distance de consigne est environ de 17 mètres. Le conducteur se doit donc d'être particulièrement vigilant afin de pouvoir reprendre en mains son véhicule en cas d'incident

Le conducteur vigilant souhaitant poursuivre une prestation de régulation de vitesse pourra le faire en actionnant le mode ULSF en-dessous d'un seuil de vitesse minimum. Le conducteur doit être relativement attentif, car les distances entre véhicules sont particulièrement faibles pour les faibles vitesses. Aussi, l'activation sur les véhicules en suivi uniquement est préférable. Les systèmes ULSF sont ainsi conçus avec seulement deux des cinq états de la figure 1 : suivi et danger.

Le véhicule indique au conducteur si l'activation ULSF est possible. Le conducteur peut alors activer le système ULSF et réguler sa vitesse sur la vitesse du véhicule cible jusqu'à l'arrêt de ce véhicule cible. Cette forme de régulation est abandonnée en cas de sortie suivie.

Le conducteur est ainsi obligé de choisir si la situation lui permet de réguler sa vitesse sur celle du véhicule qui le précède. En cas de situation relativement complexe avec insertions régulières de motos ou d'autres véhicules, le conducteur peut être amené à répéter l'activation du système ULSF fréquemment. Le conducteur peut ainsi être amené à éviter les changements de voie de son propre véhicule s'il souhaite minimiser les activations. On sait aussi que cette absence de mobilité entre les voies peut réduire l'effet accordéon entre les véhicules.

Le véhicule 1 est en outre équipé d'un dispositif de gestion de régulation non représenté, par exemple un processeur, apte à désactiver et activer ces systèmes de régulation ACC, LSF, ULSF.

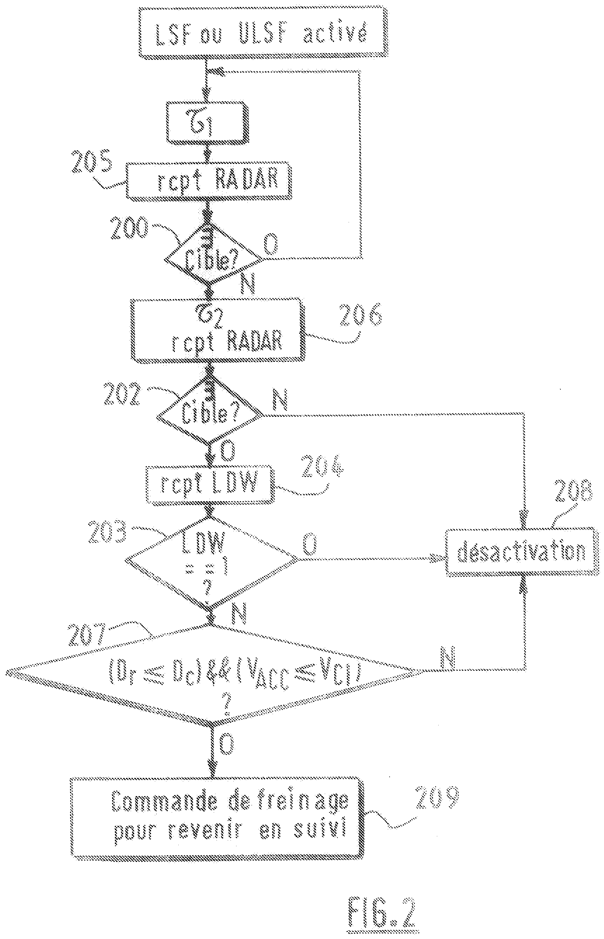

La figure 2 est un organigramme illustrant un exemple de procédé mis en oeuvre par ce dispositif.

Ce dispositif comporte des moyens de réception, du type port d'entrée par exemple, pour recevoir des signaux issus du télémètre et des signaux issus du dispositif de suivi de lignes blanches.

Le dispositif reçoit régulièrement des signaux RADAR en provenance du télémètre, lors d'étapes 205, et s'assure lors de tests 200 de la présence du véhicule cible auquel le véhicule porteur est virtuellement accroché par le système de régulation LSF ou ULSF.

Le télémètre peut par exemple comprendre un radar et/ou une caméra.

Si à un moment donné aucun véhicule cible n'est détecté, une étape d'attente 206 pendant un temps T₂ est exécutée puis des nouveaux signaux RADAR sont reçus du télémètre.

Un nouveau test 202 quant à la présence d'un véhicule cible est alors effectué, et si aucun véhicule n'est détecté, le système de régulation est désactivé lors d'une étape 208. En effet, en milieu péri-urbain ou urbain, on considère que la voie est libre devant le véhicule porteur et que c'est au conducteur de gérer les aléas de la conduite.

Ce temps d'attente T₂ est plus long que le temps d'attente pratiqué dans l'art antérieur avant de désactiver le système de régulation, afin de distinguer clairement les situations de changement de cible des situations dans lesquelles le véhicule porteur est effectivement en-tête d'un peloton de véhicules ou seul sur la route.

Si le test 202 est positif, on considère que l'on est dans une situation de changement de cible.

Un signal LDW est reçu en provenance d'un dispositif de suivi de lignes blanches lors d'une étape 204.

Un test 203 est effectué quant à la valeur de ce signal LDW. Si ce test révèle un franchissement de voie du véhicule porteur, le système de régulation est désactivé. Le test 203 permet ainsi de détecter une situation de dépassement.

Si le test 203 ne révèle pas de franchissement de voie, il n'y a pas de désactivation immédiate du système de régulation, car il est considéré que l'on se trouve dans une situation d'insertion.

Le système de régulation est ainsi commandé en fonction de la valeur du signal LDW reçu du dispositif de suivi de lignes blanches.

En cas de situation d'insertion, un test 207 est effectué. Si les valeurs de vitesse et de distance correspondent à un état d'insertion ou de suivi, le système de régulation agit sur les freins pour conserver la distance réelle proche de la distance de consigne, et la vitesse du véhicule porteur proche de la vitesse de la cible. Dit autrement, on cherche à revenir dans un état de suivi.

Si le test 207 est négatif, et que les valeurs de vitesse et de distance correspondent à un état d'approche ou d'observation, le système de régulation est coupé afin de forcer le conducteur à reprendre la main.

Si le test 207 est négatif et que les valeurs de vitesse et de distance correspondent à un état de danger, on peut prévoir une étape de freinage non représentée et/ou une étape d'alarme non représentée. Par exemple, en cas de détection de situation de danger, un freinage est par ailleurs appliqué et une indication sonore, et/ou haptique et/ou visuelle indique et demande au conducteur une reprise en mains du freinage car les conditions de décélération du système sont dépassées.

Le conducteur peut ainsi appliquer un freinage plus fort que la limite supérieure des systèmes LSF, ULSF, de sorte qu'il est préférable de l'obliger ainsi à assurer la conduite.

Ce procédé peut ainsi permettre l'acceptation d'un nouveau véhicule cible sans déconnexion de la régulation. Le véhicule porteur reste en mode LSF ou ULSF et freinera de façon automatique pour revenir à la distance de suivi désirée par le conducteur.

Il est connu que le mode ULSF peut rester activé du suivi jusqu'à l'arrêt. Aussi, il est prévu dans le mode de réalisation décrit qu'en cas d'arrêt, le conducteur aura à activer le système ULSF au redémarrage, même si un nouveau véhicule cible s'insère dans la voie pendant l'arrêt. On évite ainsi une activation automatique - et inattendue pour le conducteur - du système ULSF.

## Revendications

1. Procédé de gestion de régulation de vitesse de véhicule équipé d'au moins un système de régulation, le procédé comprenant :
- une étape de réception (204) d'un signal (LDW) en provenance d'un dispositif de suivi de lignes blanches, ledit signal correspondant à une information quant au franchissement d'une ligne de marquage au sol par le véhicule,
dans lequel la régulation est gérée en fonction du signal reçu dudit dispositif de suivi de lignes blanches.

2. Procédé selon la revendication 1, comportant en outre :
une étape de détection (205, 200, 206, 202) de changement de véhicule cible.

3. Procédé selon l'une quelconque des revendications 1 à 2, comprenant en outre
une étape de commande (208, 207, 209) du système de régulation en fonction du signal reçu du dispositif de suivi de lignes blanches.

4. Procédé selon la revendication 3, dans lequel au cours de l'étape de commande, on désactive le système de régulation lorsque le signal reçu du dispositif de suivi de lignes blanches indique un franchissement de ligne blanche (208).

5. Procédé selon l'une des revendications 3 ou 4, comprenant, lorsque le signal reçu du dispositif de suivi de lignes blanches indique un non-franchissement de ligne blanche,
un test (207) quant à des valeurs de vitesse relative et de distance relative du véhicule,
une étape de désactivation (208) du système de régulation si ledit test montre que les valeurs de vitesse et de distance relatives correspondent à un état de danger, d'approche ou d'observation.

6. Procédé selon la revendication 5, comprenant en outre une étape de freinage et/ou une étape d'alarme si le test (207) montre que les valeurs de vitesse et de distance relatives correspondent à un état de danger.

7. Procédé selon l'une quelconque des revendications 1 à 6, dans lequel ledit au moins un système de régulation comprend un système LSF et/ou un système ULSF.

8. Produit programme d'ordinateur comprenant des instructions pour la mise en oeuvre du procédé selon l'une des revendications 1 à 7 lorsqu'exécuté par un processeur.

9. Dispositif de gestion de régulation de vitesse de véhicule (1) équipé d'au moins un système de régulation, comprenant
des moyens de réception d'un signal en provenance d'un dispositif de suivi de lignes blanches, ledit signal correspondant à une information quant au franchissement d'une ligne de marquage au sol par le véhicule, et
des moyens de traitement agencés pour gérer la régulation en fonction de ce signal reçu.

## Patentansprüche

1. Verfahren zur Verwaltung der Geschwindigkeitsregelung eines Fahrzeugs, das mit mindestens einem Regelungssystem ausgerüstet ist, das Verfahren umfassend:
- einen Schritt des Empfangens (204) eines Signals (LDW) von einer Vorrichtung zur Verfolgung weißer Linien, wobei das Signal einer Information in Bezug auf die Überquerung einer Bodenmarkierungslinie durch das Fahrzeug entspricht,
wobei die Regelung in Abhängigkeit von dem Signal gesteuert wird, das von der Vorrichtung zur Verfolgung weißer Linien empfangen wird.

2. Verfahren nach Anspruch 1, ferner umfassend:
einen Schritt des Erkennens (205, 200, 206, 202) einer Änderung des Zielfahrzeugs.

3. Verfahren nach einem der Ansprüche 1 bis 2, ferner umfassend
einen Schritt des Steuerns (208, 207, 209) des Regelungssystems in Abhängigkeit von dem Signal, das von der Vorrichtung zur Verfolgung weißer Linien empfangen wird.

4. Verfahren nach Anspruch 3, wobei während des Schrittes des Steuerns das Regelungssystem deaktiviert wird, wenn das Signal, das von der Vorrichtung zur Verfolgung weißer Linien empfangen wird, eine Überquerung einer weißen Linie (208) angibt.

5. Verfahren nach einem der Ansprüche 3 oder 4, umfassend, wenn das Signal, das von der Vorrichtung zur Verfolgung weißer Linien empfangen wird, eine Nicht-Überquerung einer weißen Linie angibt,
eine Prüfung (207) in Bezug auf Werte einer relativen Geschwindigkeit und eines relativen Abstands des Fahrzeugs,
einen Schritt der Deaktivierung (208) des Regelungssystems, wenn die Prüfung zeigt, dass die Werte der relativen Geschwindigkeit und des relativen Abstands einem Gefahr-, Annäherungs- oder Beobachtungszustand entsprechen.

6. Verfahren nach Anspruch 5, ferner umfassend einen Bremsschritt und/oder einen Alarmschritt, wenn die Prüfung (207) zeigt, dass die Werte der relativen Geschwindigkeit und des relativen Abstands einem Gefahrzustand entsprechen.

7. Verfahren nach einem der Ansprüche 1 bis 6, wobei das mindestens eine Regelungssystem ein LSF- und/oder ULSF-System umfasst.

8. Computerprogramm-Produkt mit Anweisungen für die Umsetzung des Verfahrens nach einem der Ansprüche 1 bis 7, wenn es von einem Prozessor ausgeführt wird.

9. Vorrichtung zur Verwaltung der Geschwindigkeitsregelung eines Fahrzeugs (1), das mit mindestens einem Regelungssystem ausgerüstet ist, umfassend
Mittel zum Empfangen eines Signals von einer Vorrichtung zur Verfolgung weißer Linien, wobei das Signal einer Information in Bezug auf die Überquerung einer Bodenmarkierungslinie durch das Fahrzeug entspricht, und
Verarbeitungsmittel, die angeordnet sind, die Regelung in Abhängigkeit von diesem empfangenen Signal zu verwalten.

## Claims

1. Method for managing the speed regulation of a vehicle equipped with at least one regulation system, the method comprising:
- a step of reception (204) of a signal (LDW) from a line departure warning device, said signal corresponding to information concerning the crossing of a marking line on the ground by the vehicle,
in which the regulation is managed as a function of the signal received from said line departure warning device.

2. Method according to Claim 1, also comprising:
a step of detection (205, 200, 206, 202) of a change of target vehicle.

3. Method according to either of claims 1 and 2, also comprising
a step of controlling (208, 207, 209) the regulation system as a function of the signal received from the line departure warning device.

4. Method according to Claim 3, in which, during the control step, the regulation system is deactivated when the signal received from the line departure warning device indicates a crossing of a white line (208).

5. Method according to either of claims 3 and 4, comprising, when the signal received from the line departure warning device indicates a non-crossing of a white line,
a test (207) as to the relative speed and relative distance values of the vehicle,
a step of deactivation (208) of the regulation system if said test shows that the relative speed and distance values correspond to a state of danger, of approach or of observation.

6. Method according to Claim 5, also comprising a braking step and/or an alarm step if the test (207) shows that the relative speed and distance values correspond to a state of danger.

7. Method according to any one of Claims 1 to 6, in which said at least one regulation system comprises an LSF system and/or a ULSF system.

8. Computer program product comprising instructions for implementing the method according to one of Claims 1 to 7 when executed by a processor.

9. Device for managing the speed regulation of a vehicle (1) equipped with at least one regulation system, comprising
means for receiving a signal from a line departure warning device, said signal corresponding to information concerning the crossing of a marking line on the ground by the vehicle, and
processing means arranged to manage the regulation as a function of this received signal.
